# EUROPEAN PATENT SPECIFICATION

(11) **EP 3 984 775 B1**
(45) Date of publication and mention of the grant of the patent: **17.07.2024**
(21) Application number: 20821728.1
(22) Date of filing: 27.05.2020
(51) Int. Cl.: B60C 11/12, B60C 11/00, B60C 11/03

(54) **PNEUMATIC TIRE**
LUFTREIFEN
PNEUMATIQUE

(30) Priority: 14.06.2019 JP 2019110824
(43) Date of publication of application: 20.04.2022
(73) Proprietor: BRIDGESTONE CORPORATION, Chuo-ku Tokyo 104-8340 (JP)
(72) Inventor: OHSAWA, Yasuo, Tokyo 104-8340 (JP)
(74) Representative: Marks & Clerk LLP
(86) International application number: PCT/JP2020/021004
(87) International publication number: WO 2020/250692

(56) References cited:
- EP-A1- 2 138 330
- WO-A1-2017/105496
- WO-A1-2018/031369
- WO-A1-2018/235464
- DE-A1- 102015 115 832
- JP-A- 2001 130 227
- JP-A- 2006 298 057
- JP-A- 2009 262 646
- JP-A- 2010 105 509
- JP-A- 2010 208 428
- JP-A- 2016 084 046
- JP-A- 2018 002 008
- US-A1- 2019 070 906

## Description

### TECHNICAL FIELD

The present invention relates to a pneumatic tire.

### BACKGROUND

To improve the drainage performance when wear progresses, it has been proposed to arrange a sipe, provided with a wide-diameter portion having a larger groove width, in the innermost tread rubber layer in the tire radial direction, which is a different rubber layer from the tread rubber layer forming the tread surface of the tread portion. For example, see Patent Literature (PTL) 1. Attention is also drawn to the disclosures of US2019/070906A1, JP2009-262646A, DE10-2015-115832A1, EP2138330A1, WO2018/031369A1, WO2018/235464A1 and WO2017/105496A1.

### CITATION LIST

### Patent Literature

PTL 1: JP 2001-130227 A

### SUMMARY

### (Technical Problem)

However, when the aforementioned grooves with a large groove width in the aforementioned technology are exposed as wear progresses, the rigidity of the land portions is reduced. This may result in reduced wear resistance, particularly when, for example, rubber that wears easily is used in the aforementioned innermost tread rubber layer in the tire radial direction.

The present invention aims to provide a pneumatic tire capable of improving the drainage performance without sacrificing wear resistance when wear progresses.

### (Solution to Problem)

A pneumatic tire according to the present invention includes:
a tread portion; and
at least one sipe on a tread surface of the tread portion, wherein
the sipe includes a first sipe portion on the tread surface side, a second sipe portion on a sipe bottom side, and a wide-width portion, between the first sipe portion and the second sipe portion, having a sipe width larger than a sipe width of the first sipe portion and a sipe width of the second sipe portion, and
at least a bottom portion of the wide-width portion is included in an intermediate tread rubber layer located at an intermediate position in a tire radial direction between a tread rubber layer forming the tread surface and a tread rubber layer on an innermost side of the tread portion in the tire radial direction.

Here, the "tread surface" refers to the entire tread surface in the tread circumferential direction that comes into contact with the road surface when the pneumatic tire is mounted on an applicable rim, filled to a prescribed internal pressure, and subjected to the maximum load.

The "sipe" refers to a sipe having an opening width of 2.5 mm or less at the tread surface when the pneumatic tire is mounted on an applicable rim, filled to a prescribed internal pressure, and under no load.

In the present specification, the "applicable rim" refers to a standard rim of an applicable size, such as the Measuring Rim in the STANDARDS MANUAL of the European Tyre and Rim Technological Organisation (ETRTO) in Europe or the Design Rim in the YEAR BOOK of the Tire and Rim Association, Inc. (TRA) in the USA, that is described, or will be described in the future, in industrial standards effective in the region where the tire is manufactured and used, such as the YEAR BOOK published by the Japan Automobile Tyre Manufacturers Association (JATMA) in Japan, the STANDARDS MANUAL of the ETRTO, and the YEAR BOOK of the TRA. (In other words, the "rim" encompasses not only current sizes but also sizes that may be included in industrial standards in the future. An example of the "size that will be described in the future" is the size described under "future developments" in the ETRTO Standards Manual 2013). In the case of a size not specified in the aforementioned industrial standards, the "rim" refers to a rim whose width corresponds to the bead width of the tire.

The "prescribed internal pressure" represents the air pressure (maximum air pressure) corresponding to the maximum load capability of a single wheel in an applicable size/ply rating described by the aforementioned JATMA or the like. In the case of a size not listed in the industrial standards, the "prescribed internal pressure" refers to the air pressure (maximum air pressure) corresponding to the maximum load capability prescribed for each vehicle on which the tire is mounted.

The "maximum load" refers to the load corresponding to the aforementioned maximum load capability.

In the present specification, the "loss tangent" refers to the ratio (E"/E') of the dynamic loss modulus (E") to the dynamic storage modulus (E') and is the value measured on a test piece of tread rubber having a thickness of 2 mm, a width of 5 mm, and a length of 20 mm under the conditions of an initial load of 160 g, an initial strain of 1%, a vibration frequency of 50 Hz, and a temperature of 30°C.

In the present specification, the "circumferential main groove" refers to a groove extending in the tread circumferential direction, having an opening width of 2 mm or more at the tread surface when the pneumatic tire is mounted on an applicable rim, filled to a prescribed internal pressure, and under no load, and having a wear indicator affixed thereto.

### (Advantageous Effect)

According to the present invention, a pneumatic tire capable of improving the drainage performance without sacrificing wear resistance when wear progresses can be provided.

### BRIEF DESCRIPTION OF THE DRAWINGS

In the accompanying drawings:
FIG. 1 is a developed view schematically illustrating a tread pattern of a pneumatic tire according to an embodiment of the present invention;
FIG. 2 is a cross-sectional view schematically illustrating an example of a sipe in a pneumatic tire according to an embodiment of the present invention; and
FIG. 3 is a cross-sectional view schematically illustrating an example of a comparative sipe for the sake of comparison.

### DETAILED DESCRIPTION

Embodiments of the present invention are described below in detail with reference to the drawings.

The internal structure and the like of the pneumatic tire (hereinafter referred to simply as the tire) can be the same as those of a conventional tire that has a tread portion. As an example, the tire can have a pair of bead portions, a pair of sidewall portions connected to the pair of bead portions, and a tread portion disposed between the pair of sidewall portions. The tire can also have a carcass extending toroidally between the pair of bead portions and a belt disposed on the radially outward side of a crown portion of the carcass.

Unless otherwise specified, the dimensions and the like refer to the dimensions and the like when the tire is mounted on an applicable rim, filled to a prescribed internal pressure, and under no load (referred to as the "reference state" in the present specification).

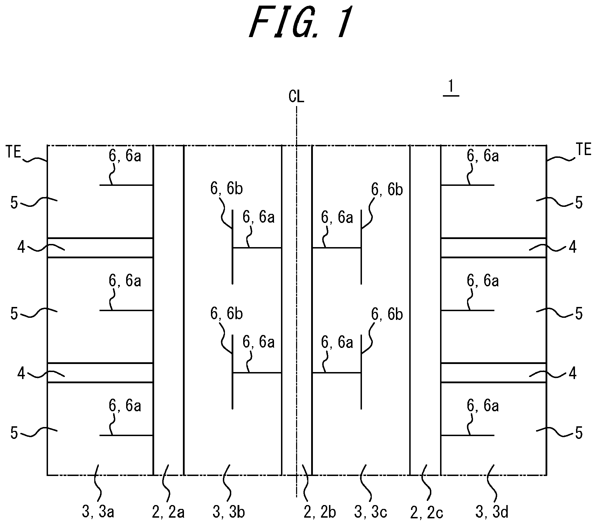

FIG. 1 is a developed view schematically illustrating a tread pattern of a pneumatic tire according to an embodiment of the present invention.

As illustrated in FIG. 1, the tire of the present example includes, on the tread surface 1 of the tread portion (also referred to below as the tread surface 1), a plurality (three in the illustrated example) of circumferential main grooves 2 (2a, 2b, 2c) extending in the tread circumferential direction, and a plurality (four in the illustrated example) of land portions 3 (3a, 3b, 3c, 3d) defined by circumferential main grooves 2 adjacent in the tread width direction among the plurality of circumferential main grooves 2, or by the circumferential main grooves 2 (2a, 2c) and the tread edges TE. In the present example, one circumferential main groove 2b is positioned on the tire equatorial plane CL, and the other circumferential main grooves 2a, 2c are respectively positioned in one half and the other half, in the tread width direction, divided by the tire equatorial plane CL. In the present example, two land portions 3 are arranged in each tread widthwise half. As illustrated, the land portions 3b, 3c are land portions by the center in the tread width direction, and the land portions 3a, 3d are land portions adjacent to the tread edges TE. In the example illustrated in FIG. 1, the number of circumferential main grooves 2 is three, but the number can be two or less (0 to 2) or can be four or more. Accordingly, the number of land portions 3 can also be three or less (one to three), or can be five or more.

As illustrated in FIG. 1, the land portions 3a, 3d adjacent to the tread edges TE are divided into blocks 5 by a plurality of widthwise grooves 4 extending in the tread width direction (two grooves in the illustrated range). In the present example, the land portions 3b, 3c by the center in the tread width direction are thus rib-like land portions, and the land portions 3a, 3d adjacent to the tread edge TE are not rib-like, i.e., are block-shaped land portions. A "rib-like land portion" refers to a land portion that is not completely divided in the tread circumferential direction by a widthwise groove or widthwise sipe extending in the tread width direction. On the other hand, all the land portions may be rib-like land portions, or all the land portions may be block-shaped land portions. Alternatively, when some of the land portions are rib-like land portions and the remaining land portions are block-shaped land portions, as in the present example, the land portions at any position in the tread width direction may be rib-like land portions. In the land portions that include the widthwise grooves 4, the number of the widthwise grooves 4 is not particularly limited and can be determined appropriately in consideration of the negative ratio and the like.

In the illustrated example, the circumferential main grooves 2 all extend along the tread circumferential direction (without inclination) in plan view of the tread surface 1, but at least one of the circumferential main grooves 2 may extend at an inclination relative to the tread circumferential direction. In this case, the circumferential main groove 2 may be inclined at an angle of, for example, 5° or less relative to the tread circumferential direction. In the illustrated example, all of the circumferential main grooves 2 extend straight in the tread circumferential direction, but at least one of the circumferential main grooves 2 may have a shape such as a zigzag shape or a curved shape.

In the illustrated example, all of the widthwise grooves 4 extend along the tread width direction (without inclination), but at least one of the widthwise grooves 4 may extend at an inclination relative to the tread width direction. In this case, the widthwise grooves 4 are preferably inclined relative to the tread width direction at an inclination angle of 45° or less, and are more preferably inclined at an inclination angle of 30° or less. In the illustrated example, all of the widthwise grooves 4 extend straight in the tread width direction, but at least one of the widthwise grooves 4 may have a bent portion.

In the illustrated example, the widthwise grooves 4 of the land portion 3a adjacent to the tread edge TE of one half in the tread width direction and the widthwise grooves 4 of the land portion 3d adjacent to the tread edge TE of the other half in the tread width direction are arranged at matching positions in the tread circumferential direction so as to overlap when projected in the tread width direction. The widthwise grooves 4 of the land portions 3 can, however, be arranged at positions shifted with respect to each other in the tread circumferential direction so as not to overlap when projected in the tread width direction.

As illustrated in FIG. 1, the tire of the present embodiment includes one or more sipes 6 on the tread surface 1 of the tread portion. In the present example, each land portion 3 includes one or more sipes 6, but there may be land portions 3 without sipes 6 as long as one or more land portions 3 include a sipe 6.

In the present example, each block 5 has only one sipe 6 in the land portions 3a, 3d adjacent to the tread edges TE. Each block 5 may, however, have two or more sipes 6, or some blocks may have no sipe 6.

In the illustrated example, the sipe 6 provided in each block 5 of the land portions 3a, 3d adjacent to the tread edges TE is a widthwise sipe 6a extending in the tread width direction. The widthwise sipe 6a extends along the tread width direction in the illustrated example but may extend at an inclination relative to the tread width direction, in which case the widthwise sipe 6a is preferably inclined relative to the tread width direction at an inclination angle of 45° or less, and more preferably inclined at an inclination angle of 30° or less.

On the other hand, when the sipe 6 is provided in the block 5, the sipe 6 can be a circumferential sipe extending in the tread circumferential direction. In this case, the sipe may be a circumferential sipe extending along the tread circumferential direction or may extend at an inclination to the tread circumferential direction. In the case in which the circumferential sipe extends at an inclination relative to the tread circumferential direction, the circumferential sipe is preferably inclined relative to the tread circumferential direction at an inclination angle of 45° or less, more preferably an inclination angle of 30° or less.

Alternatively, when sipes 6 are provided on the block 5, both widthwise sipes and circumferential sipes may be provided.

In the present example, the land portions 3b, 3c by the center in the tread width direction each include four sipes 6 within the illustrated range. Specifically, widthwise sipes 6a extending in the tread width direction and circumferential sipes 6b extending in the tread circumferential direction are connected in a substantial T-shape and arranged at intervals in the tread circumferential direction. On the other hand, when the land portions 3b, 3c by the center in the tread width direction include sipes 6, the land portions 3b, 3c can include only the widthwise sipes 6a or only the circumferential sipes 6b. In this case, the number of sipes 6 (the number of widthwise sipes 6a and the number of the circumferential sipes 6b) is not particularly limited and can be set appropriately. When both the widthwise sipes 6a and the circumferential sipes 6b are provided, the combination of the number of the widthwise sipes 6a and the number of the circumferential sipes 6b is not particularly limited and can be set appropriately. The widthwise sipe 6a and the circumferential sipe 6b may intersect, as in the present example, or may be configured not to intersect.

In the illustrated example, the widthwise sipe 6a extends along the tread width direction, but the widthwise sipe 6a may also extend at an inclination relative to the tread width direction. The circumferential sipe 6b extends along the tread circumferential direction in the illustrated example but may extend at an inclination relative to the tread circumferential direction, in which case the circumferential sipe 6b is preferably inclined relative to the tread circumferential direction at an inclination angle of 45° or less, and more preferably inclined at an inclination angle of 30° or less.

In the illustrated example, the widthwise sipes 6a of the land portion 3 a adjacent to the tread edge TE in one half, in the tread width direction, bounded by the tire equatorial plane CL and the widthwise sipes 6a of the land portion 3d adjacent to the tread edge TE in the other half, in the tread width direction, bounded by the tire equatorial plane CL are aligned in phase in the tread circumferential direction so as to overlap when projected in the tread width direction but may instead be arranged at different phases in the tread circumferential direction.

In the illustrated example, the widthwise sipes 6a of the land portion 3b by the center in the tread width direction in one half, in the tread width direction, bounded by the tire equatorial plane CL and the widthwise sipes 6a of the land portion 3c by the center in the tread width direction in the other half, in the tread width direction, bounded by the tire equatorial plane CL are aligned in phase in the tread circumferential direction so as to overlap when projected in the tread width direction but may instead be arranged at different phases in the tread circumferential direction. In the illustrated example, the circumferential sipes 6b of the land portion 3b by the center in the tread width direction in one half, in the tread width direction, bounded by the tire equatorial plane CL and the circumferential sipes 6b of the land portion 3c by the center in the tread width direction in the other half, in the tread width direction, bounded by the tire equatorial plane CL are aligned in phase in the tread circumferential direction so as to overlap when projected in the tread width direction but may instead be arranged at different phases in the tread circumferential direction.

In the illustrated example, the widthwise sipes 6a of the land portions 3a, 3d adjacent to the tread edges TE and the widthwise sipes 6a and circumferential sipes 6b of the land portions 3b, 3c by the center in the tread width direction are arranged with shifted phases in the tread circumferential direction so as not to overlap when projected in the tread width direction but may be arranged so as to overlap at least partially when projected in the tread width direction.

In the example illustrated in FIG. 1, the sipes 6 all extend straight in the extending direction in this plan view, but the sipes 6 can instead extend while curving in this plan view.

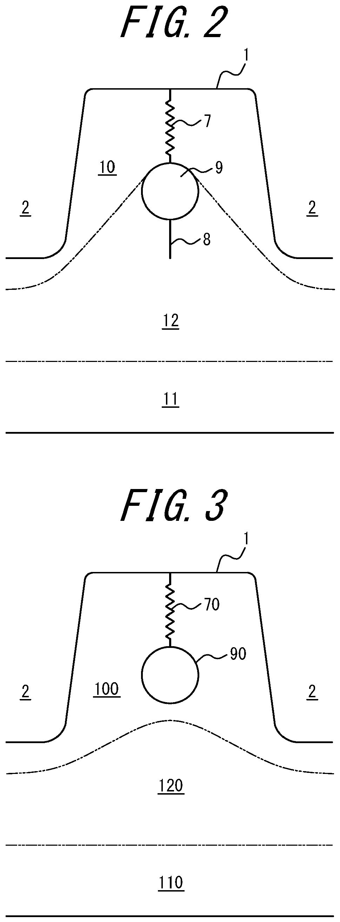

FIG. 2 is a cross-sectional view schematically illustrating an example of a sipe in a pneumatic tire according to an embodiment of the present invention. FIG. 2 illustrates the sipe in a cross-section orthogonal to the extending direction in plan view. In the illustrated example, the case in which the sipe is a circumferential sipe is illustrated, but in the following description, the sipe is not limited to being a circumferential sipe.

As illustrated in FIG. 2, the sipe 6 of the present example includes a first sipe portion 7 on the tread surface 1 side, a second sipe portion 8 on the sipe bottom side, and a wide-width (wide-diameter) portion 9, between the first sipe portion 7 and the second sipe portion 8, in which the sipe width is larger than the sipe width of the first sipe portion 7 and the sipe width of the second sipe portion 8.

As described above, the sipe 6 includes the first sipe portion 7 on the tread surface 1 side. The first sipe portion 7 can achieve the same function as an ordinary sipe from when the tire is new to the early stage of wear.

As illustrated in FIG. 2, in the present example, the first sipe portion 7 extends while curving in the depth direction of the sipe. The first sipe portion 7 can, however, also extend straight in the depth direction of the sipe (in plan view of the sipe 6, the first sipe portion 7 in the present example can extend straight in the extending direction, can extend while curving, or can extend in any combination thereof, as described above).

As described above, the sipe 6 includes the second sipe portion 8 on the sipe bottom side.

FIG. 3 is a cross-sectional view schematically illustrating an example of a comparative sipe for the sake of comparison. As illustrated in FIGS. 2 and 3, during vulcanization, the tread rubber 10 forming the tread surface 1 with the grooves 2 is extruded inwardly in the tire radial direction in such a way as to avoid the grooves 2. As illustrated in FIG. 3, if a sipe having a sipe portion 70 and a wide-width portion 90 on the tread surface 1 side were simply to be provided to improve the drainage performance when wear progresses, the widened portion 90 would be located farthest inwards in the tire radial direction. As in the case of forming a groove, the tread rubber 10 forming the tread surface 1 would be extruded during vulcanization in such a way as to avoid the wide-width portion 90, and the wide-width portion 90 would end up not in an intermediate tread rubber layer 120 but rather in the tread rubber layer 100 forming the tread surface 1.

In contrast, as illustrated in FIG. 2, the portion located farthest inwards in the tire radial direction is the second sipe portion 8 in the present example. Therefore, extrusion of the tread rubber 1 forming the tread surface 1 can be suppressed during vulcanization, so that at least the bottom portion (all in the present example) of the wide-width portion 9 can be included in an intermediate tread rubber layer 12.

When the wide-width portion 9 is exposed as wear progresses, the wide-width portion 9 can be used to improve the drainage performance, and the above configuration enables use of the intermediate tread rubber layer 12 at this time.

As illustrated in FIG. 2, in the present example, the second sipe portion 8 extends straight in the depth direction of the sipe. The second sipe portion 8 can, however, also extend in the depth direction of the sipe while bending. In plan view of the sipe 6, the second sipe portion 8 in the present example can extend straight in the extending direction, can extend while curving, or can extend in any combination thereof, as described above.

The sipe 6 most preferably extends while bending in the extending direction in plan view, the first sipe portion 7 most preferably extends in the depth direction of the sipe while bending, and the second sipe portion 8 most preferably extends straight in the depth direction of the sipe.

When the tread surface 1 has one or more circumferential main grooves 2 extending in the tire circumferential direction, as in the example illustrated in FIG. 1, the innermost edge of the second sipe portion 8 in the tire radial direction is preferably located farther outward in the tire radial direction than the groove bottom of the circumferential main groove 2. This can suppress the occurrence of cracks at the sipe bottom of the second sipe portion 8, thereby improving the tire durability.

In the present example, the sipe width of the second sipe portion 8 is 2.0 mm or less, and the ratio of the extension length of the second sipe portion 8 in the sipe depth direction to the sipe width of the second sipe portion 8 is 2 or more. This can further suppress the above-described flow of the tread rubber during vulcanization, thereby further improving the manufacturability of the tire.

As in the present example, the extension length of the first sipe portion 7 in the sipe depth direction is preferably longer than the extension length of the second sipe portion 8 in the sipe depth direction. The extension length of the first sipe portion 7 in the sipe depth direction can, however, be shorter than or the same as the extension length of the second sipe portion 8 in the sipe depth direction.

As described above, the sipe 6 includes the wide-width portion 9. As a result, the wide-width portion 9 with a large sipe width appears when wear progresses, thereby improving the drainage performance.

As illustrated in FIG. 2, the wide-width portion 9 is spherical in the present example, and more specifically is a sphere. On the other hand, the wide-width portion 9 can be spherical and have an elliptical cross-sectional shape, for example, or the wide-width portion 9 can have a cross-section shaped as a rectangle (square, rectangle, trapezoid, or the like), for example. In this case, any one or more of corner portions may be chamfered.

Here, as illustrated in FIG. 2, at least the bottom portion of the wide-width portion 9 is included in the intermediate tread rubber layer 12, which differs from the tread rubber layer 10 forming the tread surface 1 and a tread rubber layer 11 on the innermost side of the tread portion in the tire radial direction. In particular, in the present example, at least all of the wide-width portion 9 is included in the intermediate tread rubber layer 12. As a result, the tread rubber layer 12 is used when the wide-width portion 9 (at least the bottom portion thereof, or all in the present example) appears, and by appropriately adjusting the wear resistance of the tread rubber layer 12, the wear resistance when wear progresses can be further improved. For example, the wear resistance of the tread rubber layer 12 can be adjusted by adjusting the loss tangent tan 61 of the intermediate tread rubber layer 12. In this case, the loss tangent tan 61 of the intermediate tread rubber layer 12 is preferably larger than the loss tangent tan δ2 of the tread rubber layer 11 on the innermost side of the tread portion in the tire radial direction. The loss tangent tan δ1 of the intermediate tread rubber layer 12 can be larger, smaller, or the same as the loss tangent tan δ3 of the tread rubber layer 10 forming the tread surface 1.

The thicknesses of the tread rubber layers 10, 11, and 12 in FIG. 2 are illustrated schematically, and any of the layers may be thicker or thinner than any other.

As illustrated in FIG. 2, the first sipe portion 7 in the present example is included (entirely) in the tread rubber layer 10 forming the tread surface 1.

As illustrated in FIG. 2, part or all (all in the illustrated example) of the second sipe portion 8 in the present example is included in the intermediate tread rubber layer 12. Part of the second sipe portion 8 on the inner side in the tire radial direction may, however, be included in the tread rubber layer 11 on the innermost side of the tread portion in the tire radial direction.

In the present example, the tread portion includes a cap rubber layer and a base rubber layer positioned farther inward in the tire radial direction than the cap rubber layer. In the present example, the cap rubber layer includes an outer cap rubber layer and an inner cap rubber located farther inward in the tire radial direction than the outer cap rubber layer.

That is, in the present example, the tread rubber layer 10 forming the aforementioned tread surface 1 is the outer cap rubber layer. In the present example, the tread rubber layer 11 on the innermost side of the tread portion in the tire radial direction is the base rubber layer. The intermediate tread rubber layer 12 is the inner cap rubber layer.

Accordingly, in the present example, at least the bottom portion (all in the illustrated example) of the wide-width portion 9 is included in the inner cap rubber layer.

As a result, the drainage performance can be improved without sacrificing wear resistance when wear progress in the case in which the tread portion has a laminated rubber structure.

The tread portion is not, however, limited to a laminated rubber structure.

At this time, the loss tangent tan δCi of the intermediate cap rubber layer 12 is preferably larger than the loss tangent tan δB of the base rubber layer 11.

The aforementioned sipes 6 can, for example, be manufactured by machining with metal sheets, casting, or laminate molding (3D printing).

While embodiments of the present invention have been described above, the present invention is in no way limited to the above embodiments. For example, the tread rubber layer 10 forming the tread surface and the tread rubber layer 11 on the innermost side of the tread portion in the tire radial direction are each one layer in the above examples but may instead be two or more layers. The intermediate tread rubber layer 12 is also one layer in the above examples but may be two or more layers.

### REFERENCE SIGNS LIST

1 Tread surface
2, 2a, 2b, 2c Circumferential main groove
3, 3a, 3b, 3c, 3d Land portion
4 Widthwise groove
5 Block
6 Sipe
6a Widthwise sipe
6b Circumferential sipe
7 First sipe portion
8 Second sipe portion
9 Wide-width portion
10 Tread rubber layer forming tread surface
11 Tread rubber layer on innermost side of tread portion in tire radial direction
12 Intermediate tread rubber layer
CL Tire equatorial plane
TE Tread edge

## Claims

1. A pneumatic tire comprising:
a tread portion; and
at least one sipe (6) on a tread surface (1) of the tread portion,
wherein
the sipe (6) includes a first sipe portion (7) on the tread surface side, a second sipe portion (8) on a sipe bottom side, and a wide-width portion (9), between the first sipe portion (7) and the second sipe portion (8), having a sipe width larger than a sipe width of the first sipe portion (7) and a sipe width of the second sipe portion (8),
**characterised in that**
at least a bottom portion of the wide-width portion (9) is included in an intermediate tread rubber layer (12) located at an intermediate position in a tire radial direction between a tread rubber layer (10) forming the tread surface (1) and a tread rubber layer (11) on an innermost side of the tread portion in the tire radial direction.

2. The pneumatic tire of claim 1, wherein a loss tangent tan 61 of the intermediate tread rubber layer is larger than a loss tangent tan δ2 of the tread rubber layer on the innermost side of the tread portion in the tire radial direction, where "loss tangent" refers to the ratio E"/E' of the dynamic loss modulus E" to the dynamic storage modulus E' and is the value measured on a test piece of tread rubber having a thickness of 2 mm, a width of 5 mm, and a length of 20 mm under the conditions of an initial load of 160 g, an initial strain of 1%, a vibration frequency of 50 Hz, and a temperature of 30°C.

3. The pneumatic tire of claim 1 or 2, wherein all of the wide-width portion is included in the intermediate tread rubber layer.

4. The pneumatic tire of any one of claims 1 to 3, wherein an extension length of the first sipe portion in a sipe depth direction is longer than an extension length of the second sipe portion in the sipe depth direction.

5. The pneumatic tire of any one of claims 1 to 4, further comprising:
at least one circumferential main groove extending in a tread circumferential direction on the tread surface, wherein
an innermost edge of the second sipe portion in the tire radial direction is located farther outward in the tire radial direction than a groove bottom of the circumferential main groove.

6. The pneumatic tire of any one of claims 1 to 5, wherein a sipe width of the second sipe portion is 2.0 mm or less, and a ratio of an extension length of the second sipe portion in a sipe depth direction to the sipe width of the second sipe portion is 2 or more.

7. The pneumatic tire of any one of claims 1 to 6, wherein
the tread portion includes a cap rubber layer and a base rubber layer positioned farther inward in the tire radial direction than the cap rubber layer,
the cap rubber layer includes an outer cap rubber layer and an inner cap rubber layer located farther inward in the tire radial direction than the outer cap rubber layer,
the tread rubber layer forming the tread surface is the outer cap rubber layer,
the intermediate tread rubber layer is the inner cap rubber layer, and
the tread rubber layer on the innermost side of the tread portion in the tire radial direction is the base rubber layer.

8. The pneumatic tire of claim 7, wherein a loss tangent tan δCi of the inner cap rubber layer is larger than a loss tangent tan δB of the base rubber layer, where "loss tangent" refers to the ratio E"/E' of the dynamic loss modulus E" to the dynamic storage modulus E' and is the value measured on a test piece of tread rubber having a thickness of 2 mm, a width of 5 mm, and a length of 20 mm under the conditions of an initial load of 160 g, an initial strain of 1%, a vibration frequency of 50 Hz, and a temperature of 30°C.

## Patentansprüche

1. Luftreifen, der Folgendes umfasst:
einen Laufflächenabschnitt und
mindestens eine Lamelle (6) auf einer Lauffläche (1) des Laufflächenabschnitts, wobei
die Lamelle (6) einen ersten Lamellenabschnitt (7) auf der Laufflächenseite, einen zweiten Lamellenabschnitt (8) auf einer Lamellensohlenseite, und einen Abschnitt (9) breiter Breite, zwischen dem ersten Lamellenabschnitt (7) und dem zweiten Lamellenabschnitt (8), der eine Lamellenbreite größer als eine Lamellenbreite des ersten Lamellenabschnitts (7) und eine Lamellenbreite des zweiten Lamellenabschnitts (8) aufweist, einschließt,
**dadurch gekennzeichnet, dass**
mindestens ein Sohlenabschnitt des Abschnitts (9) breiter Breite in einer Laufflächengummi-Zwischenlage (12) eingeschlossen ist, die sich an einer Zwischenposition in einer Reifenradialrichtung zwischen einer Laufflächengummilage (10), welche die Lauffläche (1) bildet, und einer Laufflächengummilage (11) auf einer innersten Seite des Laufflächenabschnitts in der Reifenradialrichtung befindet.

2. Luftreifen nach Anspruch 1, wobei ein Verlustfaktor tan δ1 der Laufflächengummi-Zwischenlage größer ist als ein Verlustfaktor tan δ2 der Laufflächengummilage auf der innersten Seite des Laufflächenabschnitts in der Reifenradialrichtung, worin sich "Verlustfaktor" auf das Verhältnis E"/E' des dynamischen Verlustmoduls E" zu dem dynamischen Speichermodul E' bezieht und der Wert ist, der an einem Prüfstück von Laufflächengummi, das eine Dicke von 2 mm, eine Breite von 5 mm, und eine Länge von 20 mm aufweist, unter den Bedingungen einer anfänglichen Belastung von 160 g, einer anfänglichen Dehnung von 1 %, einer Schwingungsfrequenz von 50 Hz, und einer Temperatur von 30 °C gemessen wird.

3. Luftreifen nach Anspruch 1 oder 2, wobei der gesamte Abschnitt breiter Breite in der Laufflächengummi-Zwischenlage eingeschlossen ist.

4. Luftreifen nach einem der Ansprüche 1 bis 3, wobei eine Ausdehnungslänge des ersten Lamellenabschnitts in einer Lamellentiefenrichtung länger ist als eine Ausdehnungslänge des zweiten Lamellenabschnitts in der Lamellentiefenrichtung.

5. Luftreifen nach einem der Ansprüche 1 bis 4, der ferner Folgendes umfasst:
mindestens eine umlaufende Hauptrille, die sich in einer Laufflächenumfangsrichtung auf der Lauffläche erstreckt, wobei
sich eine innerste Kante des zweiten Lamellenabschnitts in der Reifenradialrichtung weiter außen in der Reifenradialrichtung befindet als eine Rillensohle der umlaufenden Hauptrille.

6. Luftreifen nach einem der Ansprüche 1 bis 5, wobei eine Lamellenbreite des zweiten Lamellenabschnitts 2,0 mm oder weniger beträgt, und ein Verhältnis einer Ausdehnungslänge des zweiten Lamellenabschnitts in einer Lamellentiefenrichtung zu der Lamellenbreite des zweiten Lamellenabschnitts 2 oder mehr beträgt.

7. Luftreifen nach einem der Ansprüche 1 bis 6, wobei
der Laufflächenabschnitt eine Deckgummilage und eine Basisgummilage, die weiter innen in der Reifenradialrichtung positioniert ist als die Deckgummilage, einschließt,
die Deckgummilage eine äußere Deckgummilage und eine innere Deckgummilage, die sich weiter innen in der Reifenradialrichtung befindet als die äußere Deckgummilage, einschließt,
die Laufflächengummilage, welche die Lauffläche bildet, die äußere Deckgummilage ist,
die Laufflächengummi-Zwischenlage die innere Deckgummilage ist, und
die Laufflächengummilage auf der innersten Seite des Laufflächenabschnitts in der Reifenradialrichtung die Basisgummilage ist.

8. Luftreifen nach Anspruch 7, wobei ein Verlustfaktor tan δCi der inneren Deckgummilage größer ist als ein Verlustfaktor tan δB der Basisgummilage, worin sich "Verlustfaktor" auf das Verhältnis E"/E' des dynamischen Verlustmoduls E" zu dem dynamischen Speichermodul E' bezieht und der Wert ist, der an einem Prüfstück von Laufflächengummi, das eine Dicke von 2 mm, eine Breite von 5 mm, und eine Länge von 20 mm aufweist, unter den Bedingungen einer anfänglichen Belastung von 160 g, einer anfänglichen Dehnung von 1 %, einer Schwingungsfrequenz von 50 Hz, und einer Temperatur von 30 °C gemessen wird.

## Revendications

1. Bandage pneumatique, comprenant :
un partie de bande de roulement ; et
au moins une lamelle (6) sur une surface de bande de roulement (1) de la partie de bande de roulement, dans lequel
la lamelle (6) inclut une première partie de lamelle (7) sur le côté de surface de bande de roulement, une deuxième partie de lamelle (8) sur un côté de fond de lamelle, et une partie à grande largeur (9), entre la première partie de lamelle (7) et la deuxième partie de lamelle (8), ayant une largeur de lamelle supérieure à une largeur de lamelle de la première partie de lamelle (7) et à une largeur de lamelle de la deuxième partie de lamelle (8),
**caractérisé en ce que**
au moins une partie inférieure de la partie à grande largeur (9) est incluse dans une couche de gomme de bande de roulement intermédiaire (12) située au niveau d'une position intermédiaire dans une direction radiale du pneumatique entre une couche de gomme de bande de roulement (10) formant la surface de bande de roulement (1) et une couche de gomme de bande de roulement (11) sur un côté interne extrême de la partie de bande de roulement dans la direction radiale du pneumatique.

2. Bandage pneumatique selon la revendication 1, dans lequel un facteur de pertes diélectriques tan δ1 de la couche de gomme de bande de roulement intermédiaire est supérieure à un facteur de pertes diélectriques tan δ2 de la couche de gomme de bande de roulement sur le côté interne extrême de la partie de bande de roulement dans la direction radiale du pneumatique, où « facteur de pertes diélectriques » se réfère au rapport E"/E' entre le module de perte dynamique E' ' et le module de stockage dynamique E' et est la valeur mesurée sur une pièce d'essai d'une gomme de bande de roulement ayant une épaisseur de 2 mm, une largeur de 5 mm, et une longueur de 20 mm dans les conditions d'une charge initiale de 160 g, d'une déformation initiale de 1 %, d'une fréquence de vibrations de 50 Hz et d'une température de 30 °C.

3. Bandage pneumatique selon la revendication 1 ou 2, dans lequel l'ensemble de la partie à grande largeur est inclus dans la couche de gomme de bande de roulement intermédiaire.

4. Bandage pneumatique selon l'une quelconque des revendications 1 à 3, dans lequel une longueur d'extension de la première partie de lamelle dans une direction de profondeur de lamelle est supérieure à une longueur d'extension de la deuxième partie de lamelle dans la direction de profondeur de lamelle.

5. Bandage pneumatique selon l'une quelconque des revendications 1 à 4, comprenant en outre :
au moins une rainure circonférentielle principale s'étendant dans une direction circonférentielle de bande de roulement sur la surface de bande de roulement, dans lequel
un bord interne extrême de la deuxième partie de lamelle dans la direction radiale du pneumatique est situé davantage vers l'extérieur dans la direction radiale du pneumatique qu'un fond de rainure de la rainure circonférentielle principale.

6. Bandage pneumatique selon l'une quelconque des revendications 1 à 5, dans lequel une largeur de lamelle de la deuxième partie de lamelle correspond à 2,0 mm ou moins, et un rapport entre une longueur d'extension de la deuxième partie de lamelle dans une direction de profondeur de lamelle et la largeur de lamelle de la deuxième partie de lamelle correspond à 2 ou plus.

7. Bandage pneumatique selon l'une quelconque des revendications 1 à 6, dans lequel
la partie de bande de roulement inclut une couche de gomme de chape et une couche de gomme de base positionnée davantage vers l'intérieur dans la direction radiale du pneumatique que la couche de gomme de chape,
la couche de gomme de chape inclut une couche de gomme de chape externe et une couche de gomme de chape interne située davantage vers l'intérieur dans la direction radiale du pneumatique que la couche de gomme de chape externe,
la couche de gomme de bande de roulement formant la surface de bande de roulement est la couche de gomme de chape externe,
la couche de gomme de bande de roulement intermédiaire est la couche de gomme de chape interne, et
la couche de gomme de bande de roulement sur le côté interne extrême de la partie de bande de roulement dans la direction radiale du pneumatique est la couche de gomme de base.

8. Bandage pneumatique selon la revendication 7, dans lequel un facteur de pertes diélectriques tan δCi de la couche de gomme de chape interne est supérieure à un facteur de pertes diélectriques δB de la couche de gomme de base, où « facteur de pertes diélectriques » se réfère au rapport E"/E' entre le module de perte dynamique E" et le module de stockage dynamique E' et est la valeur mesurée sur une pièce d'essai d'une gomme de bande de roulement ayant une épaisseur de 2 mm, une largeur de 5 mm, et une longueur de 20 mm dans les conditions d'une charge initiale de 160 g, d'une déformation initiale de 1 %, d'une fréquence de vibrations de 50 Hz et d'une température de 30 °C.
